# EUROPEAN PATENT APPLICATION

(11) **EP 3 691 385 A1**
(43) Date of publication of application: **05.08.2020**
(21) Application number: 18861737.7
(22) Date of filing: 12.09.2018
(51) Int. Cl.: H04W 72/08, H04W 16/14, H04W 16/28

(54) **COMMUNICATION DEVICE AND COMMUNICATION METHOD**

(30) Priority: 28.09.2017 JP 2017187873
(71) Applicant: Sharp Kabushiki Kaisha, Sakai City, Osaka 590-8522 (JP)
(72) Inventor: TOMEBA, Hiromichi, Sakai City, Osaka 590-8522 (JP); YAMADA, Ryota, Sakai City, Osaka 590-8522 (JP)
(74) Representative: Müller Hoffmann & Partner
(86) International application number: PCT/JP2018/033790
(87) International publication number: WO 2019/065239

(57) **Abstract**

A communication apparatus according to the present invention includes: a carrier sense unit configured to perform a carrier sense and reserve a radio medium only during a prescribed period of time; and a transmitter configured to transmit a signal with radio parameters including at least a beam direction in the prescribed period of time, wherein in a case that the transmitter transmits the signal with a plurality of the radio parameters in the prescribed period of time, the carrier sense unit performs the carrier sense, based on the plurality of the radio parameters.

## Description

### Technical Field

The present invention relates to a communication apparatus and a communication method.

This application claims priority to JP 2017-187873 filed on September 28, 2017, the contents of which are incorporated herein by reference.

### Background Art

Research and development activities related to the 5th generation mobile radio communication system (5G system) have been actively carried out, aiming to start commercial services around the year 2020. A vision recommendation on the standard system of the 5G system (International mobile telecommunication - 2020 and beyond: IMT-2020) was recently reported (see NPL 1) by the International Telecommunication Union Radio communications Sector (ITU-R), which is an international standardization body.

Ensuring frequency resources is an important challenge for the communication systems to handle rapidly increasing data traffic. Thus, in 5G, it is one of the targets to achieve ultra large capacity communication by using higher frequency bands than the frequency bands used in Long term evolution (LTE).

Ensuring frequency resources is an important challenge for cellular services handle the rapidly increasing data traffic. The frequency bands previously assumed by the cellular services are frequency bands, so-called licensed bands, which radio operators have been allowed to use from countries or regions where they provide services, and the available frequency bands are limited.

Thus, there has recently been discussed the provision of cellular services using frequency bands, so-called unlicensed bands, which do not require permission for use from countries or regions. Even in 5G, it is expected that applying the CA technique employed by the LTE-A system to the unlicensed bands can make it possible to handle the rapidly increasing data traffic with high efficiency (see NPL 2).

### Citation List

### Non Patent Literature

NPL 1: "IMT Vision - Framework and overall objectives of the future development of IMT for 2020 and beyond," Recommendation ITU-R M. 2083-0, Sept. 2015.
NPL 2: 3GPP RP-170205, "Study on NR-based Access to Unlicensed Spectrum," March 2017.

### Summary of Invention

### Technical Problem

However, the unlicensed bands will be shared with other radio access systems. In particular, in transmission using high frequencies, beamforming with multiple antennas is essential for desired received power enhancement, but there is a problem that strong interference signals due to beamforming are likely to occur at random.

One aspect of the present invention has been made in view of such circumstances, and an object of the present invention is to provide a communication apparatus and a communication method capable of controlling interference signals to achieve coexistence with other radio access systems while improving frequency utilization efficiency or throughput.

### Solution to Problem

To address the above-mentioned drawbacks, a communication apparatus and a communication method according to an aspect of the present invention are configured as follows.
(1) Specifically, a communication apparatus according to an aspect of the present invention is a communication apparatus for performing a first carrier sense, the communication apparatus including: a carrier sense unit configured to perform the first carrier sense and reserve a radio medium only during a prescribed period of time; and a transmitter configured to transmit a signal with radio parameters including at least a beam direction in the prescribed period of time, wherein in a case that the transmitter transmits the signal with a plurality of the radio parameters in the prescribed period of time, the carrier sense unit performs the first carrier sense, based on the plurality of the radio parameters.
(2) A communication apparatus according to an aspect of the present invention is described in (1) above, wherein in a case that the transmitter transmits the signal with the plurality of the radio parameters in the prescribed period of time, the carrier sense unit performs a second carrier sense immediately before the signal is transmitted with each of the plurality of the radio parameters.
(3) A communication apparatus according to an aspect of the present invention is described in (1) above, wherein the transmitter transmits a synchronization signal or a data signal, and in a case that the transmitter transmits only the synchronization signal, the carrier sense unit performs the first carrier sense, based on one of the plurality of the radio parameters.
(4) A communication apparatus according to an aspect of the present invention is described in (1) above, wherein the carrier sense unit performs the first carrier sense, based on each of the plurality of the radio parameters, and determines that the radio medium is allowed to be reserved in a case that an average value of received power acquired by the first carrier sense is less than a prescribed threshold.
(5) A communication apparatus according to an aspect of the present invention is described in (1) above, wherein a parameter that the carrier sense unit configures in a case of performing the first carrier sense is different between a case that the transmitter transmits the signal with the plurality of the radio parameters in the prescribed period of time and a case that the transmitter transmits the signal with one of the plurality of the radio parameters in the prescribed period of time.
(6) A communication apparatus according to an aspect of the present invention is described in (3) above, wherein the transmitter configures and transmits a plurality of the synchronization signals at different frequency positions, based on a prescribed frequency hopping pattern within the prescribed period of time.
(7) A communication apparatus according to an aspect of the present invention is described in (6) above, wherein the transmitter configures a plurality of the frequency hopping patterns; and the plurality of the frequency hopping patterns are frequency hopping patterns common to the communication apparatus and other base station apparatuses or frequency hopping patterns specific to the communication apparatus itself.
(8) A communication apparatus according to an aspect of the present invention is described in any one of (1) to (7) above, wherein the first carrier sense is an operation to be performed by the carrier sense unit to reserve the radio medium only during the prescribed period of time.
(9) A communication apparatus according to an aspect of the present invention is described in (2) above, wherein the second carrier sense is an operation to be performed by the carrier sense unit to confirm that interference to the radio medium does not occur in the prescribed period of time reserved by the first carrier sense.
(10) A communication method according to an aspect of the present invention is a communication method for a communication apparatus for performing a carrier sense, the communication method including the steps of: performing the carrier sense and reserving a radio medium only during a prescribed period of time; transmitting a signal with radio parameters including at least a beam direction in the prescribed period of time; and in a case that the signal is transmitted with a plurality of the radio parameters in the prescribed period of time, performing the carrier sense, based on the plurality of the radio parameters.

### Advantageous Effects of Invention

According to an aspect of the present invention, it is possible to efficiently perform interference control between communication apparatuses and improve frequency utilization efficiency or throughput.

### Brief Description of Drawings

FIG. 1 is a diagram illustrating an example of a communication system according to the present embodiment.
FIG. 2 is a block diagram illustrating a configuration example of a base station apparatus according to the present embodiment.
FIG. 3 is a block diagram illustrating a configuration example of a terminal apparatus according to the present embodiment.
FIG. 4 is a diagram illustrating an example of a communication system according to the present embodiment.
FIG. 5 is a diagram illustrating a flowchart example according to the present embodiment.
FIG. 6 is a diagram illustrating an example of a communication system according to the present embodiment.

### Description of Embodiments

A communication system according to the present embodiment includes a base station apparatus (a transmission apparatus, cells, a transmission point, a group of transmit antennas, a group of transmit antenna ports, component carriers, an eNodeB, a transmission point, a transmission and/or reception point, a transmission panel, and an access point) and a terminal apparatus (a terminal, a mobile terminal, a reception point, a reception terminal, a reception apparatus, a group of receive antennas, a group of receive antenna ports, a UE, a reception point, a reception panel, and a station). A base station apparatus connected to a terminal apparatus (base station apparatus that establishes a radio link with a terminal apparatus) is referred to as a serving cell. The base station apparatus and the terminal apparatus are collectively referred to as a communication apparatus. The operations described below may be implemented by a communication apparatus, unless otherwise noted.

The base station apparatus and the terminal apparatus in the present embodiment can communicate in a frequency band for which a license is required (a licensed band) and/or a frequency band for which a license is not required (an unlicensed band).

According to the present embodiments, "X/Y" includes the meaning of "X or Y". According to the present embodiments, "X/Y" includes the meaning of "X and Y". According to the present embodiments, "X/Y" includes the meaning of "X and/or Y".

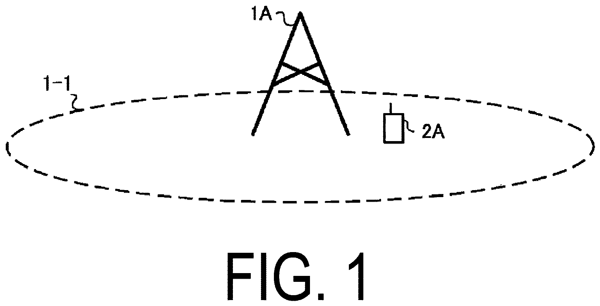

FIG. 1 is a diagram illustrating an example of a communication system according to the present embodiment. As illustrated in FIG. 1, the communication system according to the present embodiment includes a base station apparatus 1A and a terminal apparatus 2A. A coverage 1-1 is a range (a communication area) in which the base station apparatus 1A can connect to the terminal apparatus. The terminal apparatuses 2A is also referred to as a terminal apparatus 2. The base station apparatus and the terminal apparatus are also collectively referred to as a communication apparatus.

With respect to FIG. 1, the following uplink physical channels are used for uplink radio communication from the terminal apparatus 2A to the base station apparatus 1A. The uplink physical channels are used for transmitting information output from a higher layer.
- Physical Uplink Control Channel (PUCCH)
- Physical Uplink Shared Channel (PUSCH)
- Physical Random Access Channel (PRACH)

The PUCCH is used to transmit Uplink Control Information (UCI). The Uplink Control Information includes a positive acknowledgement (ACK) or a negative acknowledgement (NACK) (ACK/NACK) for downlink data (a downlink transport block or a Downlink-Shared Channel (DL-SCH)). The ACK/NACK for the downlink data is also referred to as a HARQ-ACK or a HARQ feedback.

Here, the Uplink Control Information includes Channel State Information (CSI) for the downlink. The Uplink Control Information includes a Scheduling Request (SR) used to request an Uplink-Shared Channel (UL-SCH) resource. The Channel State Information refers to a Rank Indicator (RI) for specifying a preferable spatial multiplexing number, a Precoding Matrix Indicator (PMI) for specifying a preferable precoder, a Channel Quality Indicator (CQI) for specifying a preferable transmission rate, a CSI-Reference Signal (CSI-RS) Resource Indicator (CRI) for specifying a preferable CSI-RS resource, and the like.

The Channel Quality Indicator CQI (hereinafter, referred to as a CQI value) can be a preferable modulation scheme (for example, QPSK, 16QAM, 64QAM, 256QAM, or the like) and a preferable coding rate in a prescribed band (details of which will be described later). The CQI value can be an index (CQI Index) determined by the above change scheme, coding rate, and the like. The CQI value can take a value predetermined in the system.

The CRI indicates a CSI-RS resource that are preferable for received power/reception quality from multiple CSI-RS resources.

Note that the Rank Indicator and the Precoding Quality Indicator can take the values predetermined in the system. The Rank Indicator and the Precoding Matrix Indicator can be an index determined by the number of spatial multiplexing and Precoding Matrix information. Note that some or all of the CQI value, the PMI value, the RI value, and the CRI value are also collectively referred to as a CSI value.

The PUSCH is used for transmission of uplink data (an uplink transport block, UL-SCH). The PUSCH may be used for transmission of an ACK/NACK and/or Channel State Information along with the uplink data. The PUSCH may be used to transmit the uplink control information only.

The PUSCH is used to transmit an RRC message. The RRC message is a signal/information that is processed in a Radio Resource Control (RRC) layer. The PUSCH is used to transmit a MAC Control Element (CE). Here, the MAC CE is a signal/information that is processed (transmitted) in a Medium Access Control (MAC) layer.

For example, a power headroom may be included in the MAC CE and may be reported via the PUSCH. In other words, a MAC CE field may be used to indicate a level of the power headroom.

The PRACH is used to transmit a random access preamble.

In the uplink radio communication, an Uplink Reference Signal (UL RS) is used as an uplink physical signal. The uplink physical signal is not used for transmission of information output from a higher layer, but is used by a physical layer. The Uplink Reference Signal includes a Demodulation Reference Signal (DMRS) and a Sounding Reference Signal (SRS).

The DMRS is associated with transmission of the PUSCH or the PUCCH. For example, the base station apparatus 1A uses the DMRS in order to perform channel compensation of the PUSCH or the PUCCH. For example, the base station apparatus 1A uses the SRS to measure an uplink channel state. The SRS is used for uplink observation (sounding). The PT-RS is used to compensate for phase noise. Note that the DMRS of the uplink is also referred to as an uplink DMRS.

In FIG. 1, the following downlink physical channels are used for the downlink radio communication from the base station apparatus 1A to the terminal apparatus 2A. The downlink physical channels are used for transmitting information output from the higher layer.
- Physical Broadcast Channel (PBCH)
- Physical Control Format Indicator Channel (PCFICH)
- Physical Hybrid automatic repeat request Indicator Channel (PHICH)
- Physical Downlink Control Channel (PDCCH)
- Enhanced Physical Downlink Control Channel (EPDCCH)
- Physical Downlink Shared Channel (PDSCH)

The PBCH is used for broadcasting a Master Information Block (a MIB, a Broadcast Channel (BCH)) that is shared by the terminal apparatuses. The PCFICH is used for transmission of information for indicating a region (for example, the number of Orthogonal Frequency Division Multiplexing (OFDM) symbols) to be used for transmission of the PDCCH. Note that the MIB is also referred to as minimum system information.

The PHICH is used for transmission of an ACK/NACK with respect to uplink data (a transport block, a codeword) received by the base station apparatus 1A. In other words, the PHICH is used for transmission of a HARQ indicator (HARQ feedback) for indicating an ACK/NACK with respect to the uplink data. The ACK/NACK is also called a HARQ-ACK. The terminal apparatus 2A reports the ACK/NACK having been received to a higher layer. The ACK/NACK refers to an ACK for indicating a successful reception, a NACK for indicating an unsuccessful reception, and a DTX for indicating that no corresponding data is present. In a case that the PHICH for uplink data is not present, the terminal apparatus 2A reports an ACK to a higher layer.

The PDCCH and the EPDCCH are used to transmit Downlink Control Information (DCI). Here, multiple DCI formats are defined for transmission of the downlink control information. To be more specific, a field for the downlink control information is defined in a DCI format and is mapped to information bits.

For example, as a DCI format for the downlink, DCI format 1A to be used for the scheduling of one PDSCH in one cell (transmission of a single downlink transport block) is defined.

For example, the DCI format for the downlink includes downlink control information such as information of PDSCH resource allocation, information of a Modulation and Coding Scheme (MCS) for the PDSCH, and a TPC command for the PUCCH. Here, the DCI format for the downlink is also referred to as a downlink grant (or downlink assignment).

For example, as a DCI format for the uplink, DCI format 0 to be used for the scheduling of one PUSCH in one cell (transmission of a single uplink transport block) is defined.

For example, the DCI format for the uplink includes uplink control information such as information of PUSCH resource allocation, information of MCS for the PUSCH, and a TPC command for the PUSCH. Here, the DCI format for the uplink is also referred to as an uplink grant (or uplink assignment).

The DCI format for the uplink can be used to request Channel State Information (CSI; also referred to as reception quality information) for the downlink (CSI request).

The DCI format for the uplink can be used for a configuration for indicating an uplink resource to which a channel state information feedback report (CSI feedback report) is mapped, the channel state information feedback report being fed back to the base station apparatus by the terminal apparatus. For example, the channel state information feedback report can be used for a configuration for indicating an uplink resource that periodically reports channel state information (Periodic CSI). The channel state information feedback report can be used for a mode configuration (CSI report mode) for periodically reporting the channel state information.

For example, the channel state information feedback report can be used for a configuration for indicating an uplink resource that reports aperiodic channel state information (Aperiodic CSI). The channel state information feedback report can be used for a mode configuration (CSI report mode) for aperiodically reporting the channel state information.

For example, the channel state information feedback report can be used for a configuration for indicating an uplink resource that reports semi-persistent channel state information (semi-persistent CSI). The channel state information feedback report can be used for a mode configuration (CSI report mode) for semi-persistently reporting the channel state information.

The DCI format for the uplink can be used for a configuration for indicating a type of the channel state information feedback report that is fed back to the base station apparatus by the terminal apparatus. The type of the channel state information feedback report includes wideband CSI (for example, Wideband CQI), narrowband CSI (for example, Subband CQI), and the like.

In a case where a PDSCH resource is scheduled in accordance with the downlink assignment, the terminal apparatus receives downlink data on the scheduled PDSCH. In a case where a PUSCH resource is scheduled in accordance with the uplink grant, the terminal apparatus transmits uplink data and/or uplink control information on the scheduled PUSCH.

The PDSCH is used to transmit downlink data (a downlink transport block, DL-SCH). The PDSCH is used to transmit a system information block type 1 message. The system information block type 1 message is cell-specific information.

The PDSCH is used to transmit a system information message. The system information message includes a system information block X other than the system information block type 1. The system information message is cell-specific information.

The PDSCH is used to transmit an RRC message. Here, the RRC message transmitted from the base station apparatus may be shared by multiple terminal apparatuses in a cell. The RRC message transmitted from the base station apparatus 1A may be a dedicated message to a given terminal apparatus 2 (also referred to as dedicated signaling). In other words, user equipment specific information (unique to user equipment) is transmitted by using a message dedicated to the given terminal apparatus. The PDSCH is used to transmit a MAC CE.

Here, the RRC message and/or MAC CE is also referred to as higher layer signaling.

The PDSCH can be used to request downlink channel state information. The PDSCH can be used for transmission of an uplink resource to which a channel state information feedback report (CSI feedback report) is mapped, the channel state information feedback report being fed back to the base station apparatus by the terminal apparatus. For example, the channel state information feedback report can be used for a configuration for indicating an uplink resource that periodically reports channel state information (Periodic CSI). The channel state information feedback report can be used for a mode configuration (CSI report mode) for periodically reporting the channel state information.

The type of the downlink channel state information feedback report includes wideband CSI (for example, Wideband CSI) and narrowband CSI (for example, Subband CSI). The wideband CSI calculates one piece of channel state information for the system band of a cell. The narrowband CSI divides the system band in prescribed units, and calculates one piece of channel state information for each division.

In the downlink radio communication, a Synchronization signal (SS) and a Downlink Reference Signal (DL RS) are used as downlink physical signals. The downlink physical signals are not used for transmission of information output from the higher layers, but are used by the physical layer. Note that synchronization signals include a Primary Synchronization Signal (PSS) and a Secondary Synchronization Signal (SSS).

The synchronization signal is used for the terminal apparatus to take synchronization in the frequency domain and the time domain in the downlink. The synchronization signal is also used to measure a received power, a reception quality, or a Signal-to-Interference and Noise power Ratio (SINR). Note that the received power measured by the synchronization signal is also referred to as a Synchronization Signal-Reference Signal Received Power (SS-RSRP), the reception quality measured by the synchronization signal is also referred to as a Reference Signal Received Quality (SS-RSRQ), and the SINR measured by the synchronization signal is also referred to as a SS-SINR. Note that SS-RSRQ is a ratio of the SS-RSRP to a RSSI. The Received Signal Strength Indicator (RSSI) is a total average received power for a certain observation period. The synchronization signals/downlink reference signals are used for the terminal apparatus to perform channel compensation on a downlink physical channel. For example, the synchronization signals/downlink reference signals are used for the terminal apparatus to calculate the downlink channel state information.

Here, the downlink reference signals include a Cell-specific Reference Signal (CRS), a Demodulation Reference signal (DMRS), a Non-Zero Power Channel State Information-Reference Signal (NZP CSI-RS), a Zero Power Channel State Information-Reference Signal (ZP CSI-RS), a PT-RS, and a Tracking Reference Signal (TRS). Note that the DMRS of the downlink is also referred to as a downlink DMRS. Note that in the following embodiments, in a case that only referred to as a CSI-RS, it includes an NZP CSI-RS and/or a ZP CSI-RS.

The CRS is transmitted in an entire band of a subframe and is used to perform demodulation of the PBCH/PDCCH/PHICH/PCFICH/PDSCH. The DMRS is transmitted in a subframe and a band used for the transmission of the PDSCH/PBCH/PDCCH/EPDCCH with which the DMRS is associated and is used to demodulate the PDSCH with which the DMRS is associated.

A resource for the NZP CSI-RS is configured by the base station apparatus 1A. For example, the terminal apparatus 2A performs signal measurement (channel measurement) by using the NZP CSI-RS. The NZP CSI-RS is also used for beam recovery or the like to recover in a case that the beam sweeping that searches for a preferable beam direction or the received power/reception quality in the beam direction is degraded. A resource for the ZP CSI-RS is configured by the base station apparatus 1A. With zero output, the base station apparatus 1A transmits the ZP CSI-RS. The terminal apparatus 2A performs interference measurement in a resource to which NZP CSI-RS corresponds, for example.

The CSI-RS is also used to measure a received power, a reception quality, or an SINR. The received power measured by the CSI-RS is also referred to as a CSI-RSRP, the reception quality measured by the CSI-RS is also referred to as a CSI-RSRQ, and the SINR measured by the CSI-RS is also referred to as a CSI-SINR. Note that the CSI-RSRQ is the ratio of the CSI-RSRP to the RSSI.

A Multimedia Broadcast multicast service Single Frequency Network (MBSFN) RS is transmitted in an entire band of the subframe used for transmitting the PMCH. The MBSFN RS is used to demodulate the PMCH. The PMCH is transmitted through the antenna port used for transmission of the MBSFN RS.

Here, the downlink physical channel and the downlink physical signal are also collectively referred to as a downlink signal. The uplink physical channel and the uplink physical signal are also collectively referred to as an uplink signal. The downlink physical channel and the uplink physical channel are collectively referred to as a physical channel. The downlink physical signal and the uplink physical signal are also collectively referred to as a physical signal.

The BCH, the UL-SCH, and the DL-SCH are transport channels. Channels used in the Medium Access Control (MAC) layer are referred to as transport channels. A unit of the transport channel used in the MAC layer is also referred to as a Transport Block (TB) or a MAC Protocol Data Unit (PDU). The transport block is a unit of data that the MAC layer delivers to the physical layer. In the physical layer, the transport block is mapped to a codeword, and coding processing and the like are performed for each codeword.

For terminal apparatuses that supports Carrier Aggregation (CA), the base station apparatus can integrate multiple Component Carriers (CCs) for transmission in a broader band to perform communication. In carrier aggregation, one Primary Cell (PCell) and one or more Secondary Cells (SCells) are configured as a set of serving cells.

In Dual Connectivity (DC), a Master Cell Group (MCG) and a Secondary Cell Group (SCG) are configured as a group of serving cells. The MCG includes a PCell and optionally one or more SCells. The SCG includes a primary SCell (PSCell) and optionally one or more SCells.

The base station apparatus can communicate by using a radio frame. The radio frame includes multiple subframes (sub-periods). In a case that a frame length is expressed in time, for example, a radio frame length can be 10 milliseconds (ms), and a subframe length can be 1 ms. In this example, the radio frame includes 10 subframes.

The slot includes 14 OFDM symbols. Since the OFDM symbol length may vary depending on the subcarrier spacing, the slot length may also vary depending on the subcarrier spacing. The mini-slot includes OFDM symbols less than the slot. The slot/mini-slot can be used as a scheduling unit. Note that the terminal apparatus may know a slot-based scheduling/mini-slot based scheduling by the position (allocation) of the first downlink DMRS. In the slot-based scheduling, the first downlink DMRS is allocated in the third or fourth symbol of the slot. In the mini-slot based scheduling, the first downlink DMRS is allocated in the first symbol of the scheduled data (resources, PDSCH).

A resource block is defined by 12 continuous subcarriers. A resource element is defined by an index of the frequency domain (for example, a subcarrier index) and an index of the time domain (for example, an OFDM symbol index). The resource elements are classified as an uplink resource element, a downlink element, a flexible resource element, and a reserved resource element. In the reserved resource element, the terminal apparatus does not transmit an uplink signal and does not receive a downlink signal.

Multiple Subcarrier spacings (SCSs) are supported. For example, the SCS is 15/30/60/120/240/480 kHz.

The base station apparatus/terminal apparatus can communicate in a licensed band or an unlicensed band. The base station apparatus/terminal apparatus can perform carrier aggregation communication with a licensed band being a PCell and at least one SCell operating in an unlicensed band. The base station apparatus/terminal apparatus can communicate in dual connectivity in which a master cell group communicates with a licensed band and a secondary cell group communicates in an unlicensed band. The base station apparatus/terminal apparatus can communicate only with a PCell in an unlicensed band. The base station apparatus/terminal apparatus can communicate with CA or DC only in an unlicensed band. Note that communicating with a licensed band as a PCell and with an unlicensed band cell (SCell, PSCell) being assisted by CA, DC, for example, is referred to as Licensed-Assisted Access (LAA). The communication of the base station apparatus/terminal apparatus only in an unlicensed band is also referred to as Unlicensed-standalone access (ULSA). The communication of the base station apparatus/terminal apparatus only in a licensed band is also referred to as Licensed Access (LA).

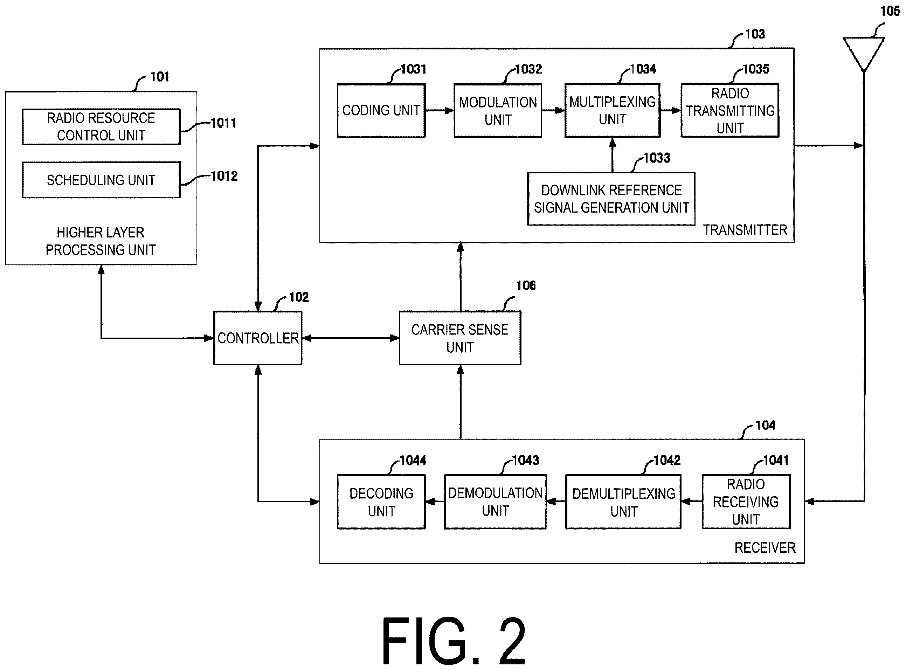

FIG. 2 is a schematic block diagram illustrating a configuration of the base station apparatus 1A according to the present embodiment. As illustrated in FIG. 2, the base station apparatus 1A includes a higher layer processing unit (higher layer processing step) 101, a controller (controlling step) 102, a transmitter (transmitting step) 103, a receiver (receiving step) 104, a transmit and/or receive antenna 105, and a carrier sense unit (carrier sense step) 106. The higher layer processing unit 101 includes a radio resource control unit (radio resource controlling step) 1011 and a scheduling unit (scheduling step) 1012. The transmitter 103 includes a coding unit (coding step) 1031, a modulation unit (modulating step) 1032, a downlink reference signal generation unit (downlink reference signal generating step) 1033, a multiplexing unit (multiplexing step) 1034, and a radio transmitting unit (radio transmitting step) 1035. The receiver 104 includes a radio receiving unit (radio receiving step) 1041, a demultiplexing unit (demultiplexing step) 1042, a demodulation unit (demodulating step) 1043, and a decoding unit (decoding step) 1044.

The higher layer processing unit 101 performs processing of a Medium Access Control (MAC) layer, a Packet Data Convergence Protocol (PDCP) layer, a Radio Link Control (RLC) layer, and a Radio Resource Control (RRC) layer. The higher layer processing unit 101 generates information necessary for control of the transmitter 103 and the receiver 104, and outputs the generated information to the controller 102.

The higher layer processing unit 101 receives information of a terminal apparatus, such as a capability of the terminal apparatus (UE capability), from the terminal apparatus. To rephrase, the terminal apparatus transmits its function to the base station apparatus by higher layer signaling.

Note that in the following description, information of a terminal apparatus includes information for indicating whether the terminal apparatus supports a prescribed function, or information for indicating that the terminal apparatus has completed the introduction and test of a prescribed function. In the following description, information of whether the prescribed function is supported includes information of whether the introduction and test of the prescribed function have been completed.

For example, in a case that a terminal apparatus supports a prescribed function, the terminal apparatus transmits information (parameters) for indicating whether the prescribed function is supported. In a case where a terminal apparatus does not support a prescribed function, the terminal apparatus does not transmit information (parameters) for indicating whether the prescribed function is supported. In other words, whether the prescribed function is supported is reported by whether information (parameters) indicating whether the prescribed function is supported is transmitted. The information (parameters) indicating whether the prescribed function is supported may be reported using one bit of 1 or 0.

The radio resource control unit 1011 generates, or acquires from a higher node, the downlink data (the transport block) allocated in the downlink PDSCH, system information, the RRC message, the MAC Control Element (CE), and the like. The radio resource control unit 1011 outputs the downlink data to the transmitter 103, and outputs other information to the controller 102. The radio resource control unit 1011 manages various configuration information of the terminal apparatuses.

The scheduling unit 1012 determines a frequency and a subframe to which the physical channels (PDSCH and PUSCH) are allocated, the coding rate and modulation scheme (or MCS) for the physical channels (PDSCH and PUSCH), the transmit power, and the like. The scheduling unit 1012 outputs the determined information to the controller 102.

The scheduling unit 1012 generates information to be used for scheduling the physical channels (PDSCH and PUSCH), based on the result of the scheduling. The scheduling unit 1012 outputs the generated information to the controller 102.

Based on the information input from the higher layer processing unit 101, the controller 102 generates a control signal for controlling the transmitter 103 and the receiver 104. The controller 102 generates the downlink control information based on the information input from the higher layer processing unit 101, and outputs the generated information to the transmitter 103. In a case that the controller 102 needs to transmit after a carrier sense, the controller 102 controls the carrier sense unit 106 to perform a carrier sense, and acquires a channel occupying time (or channel transmission allowing time). After the carrier sense is successful, the controller 102 controls the transmitter 103 to transmit a resource reservation signal, a transmission signal, or the like.

The transmitter 103 generates the downlink reference signal in accordance with the control signal input from the controller 102, codes and modulates the HARQ indicator, the downlink control information, and the downlink data that are input from the higher layer processing unit 101, multiplexes PHICH, PDCCH, EPDCCH, PDSCH, and the downlink reference signal, and transmits a signal obtained through the multiplexing to the terminal apparatus 2 through the transmit and/or receive antenna 105.

The coding unit 1031 codes the HARQ indicator, the downlink control information, and the downlink data that are input from the higher layer processing unit 101, in compliance with a predetermined coding scheme, such as block coding, convolutional coding, turbo coding, Low density parity check (LDPC) coding, Polar coding, and the like, or in compliance with a coding scheme determined by the radio resource control unit 1011. The modulation unit 1032 modulates the coded bits input from the coding unit 1031, in compliance with the modulation scheme prescribed in advance, such as Binary Phase Shift Keying (BPSK), quadrature Phase Shift Keying (QPSK), quadrature amplitude modulation (16QAM), 64QAM, or 256QAM, or in compliance with the modulation scheme determined by the radio resource control unit 1011.

The downlink reference signal generation unit 1033 generates, as the downlink reference signal, a sequence, known to the terminal apparatus 2A, that is determined in accordance with a rule predetermined based on the physical cell identity (PCI, cell ID) for identifying the base station apparatus 1A, and the like.

The multiplexing unit 1034 multiplexes the modulated modulation symbol of each channel, the generated downlink reference signal, and the downlink control information. To be more specific, the multiplexing unit 1034 maps the modulated modulation symbol of each channel, the generated downlink reference signal, and the downlink control information to the resource elements.

The radio transmitting unit 1035 performs Inverse Fast Fourier Transform (IFFT) on the modulation symbol resulting from the multiplexing or the like, generates an OFDM symbol, adds a cyclic prefix (CP) to the generated OFDM symbol, generates a baseband digital signal, converts the baseband digital signal into an analog signal, removes unnecessary frequency components through filtering, up-converts a result of the removal into a signal of a carrier frequency, performs power amplification, and outputs a final result to the transmit and/or receive antenna 105 for transmission.

In accordance with the control signal input from the controller 102, the receiver 104 demultiplexes, demodulates, and decodes the received signal received from the terminal apparatus 2A through the transmit and/or receive antenna 105, and outputs information resulting from the decoding to the higher layer processing unit 101.

The radio receiving unit 1041 converts, by down-converting, an uplink signal received through the transmit and/or receive antenna 105 into a baseband signal, removes unnecessary frequency components, controls the amplification level in such a manner as to preferably maintain a signal level, performs orthogonal demodulation based on an in-phase component and an orthogonal component of the received signal, and converts the resulting orthogonally-demodulated analog signal into a digital signal.

The radio receiving unit 1041 removes a portion corresponding to CP from the digital signal resulting from the conversion. The radio receiving unit 1041 performs Fast Fourier Transform (FFT) of the signal from which the CP has been removed, extracts a signal in the frequency domain, and outputs the resulting signal to the demultiplexing unit 1042.

The demultiplexing unit 1042 demultiplexes the signal input from the radio receiving unit 1041 into signals such as PUCCH, PUSCH, and uplink reference signal. The demultiplexing is performed based on radio resource allocation information, included in the uplink grant notified to each of the terminal apparatuses 2, that is predetermined by the base station apparatus 1A by using the radio resource control unit 1011.

The demultiplexing unit 1042 performs channel compensation for PUCCH and PUSCH. The demultiplexing unit 1042 demultiplexes the uplink reference signal.

The demodulation unit 1043 performs Inverse Discrete Fourier Transform (IDFT) of PUSCH, acquires modulation symbols, and demodulates, for each of the modulation symbols of PUCCH and PUSCH, a received signal in compliance with a predetermined modulation scheme, such as BPSK, QPSK, 16QAM, 64QAM, and 256QAM, or in compliance with a modulation scheme that the base station apparatus 1A notified to each of the terminal apparatuses 2 in advance by using the uplink grant.

The decoding unit 1044 decodes the coded bits of PUCCH and PUSCH that have been demodulated, at a coding rate, in compliance with a predetermined coding scheme, that is predetermined or notified from the base station apparatus 1A to the terminal apparatus 2 in advance by using the uplink grant, and outputs the decoded uplink data and uplink control information to the higher layer processing unit 101. In a case where PUSCH is retransmitted, the decoding unit 1044 performs the decoding by using the coded bits that is input from the higher layer processing unit 101 and retained in an HARQ buffer, and the demodulated coded bits.

The carrier sense unit 106 performs carrier sense and acquires a channel occupancy time (or channel transmission allowing time).

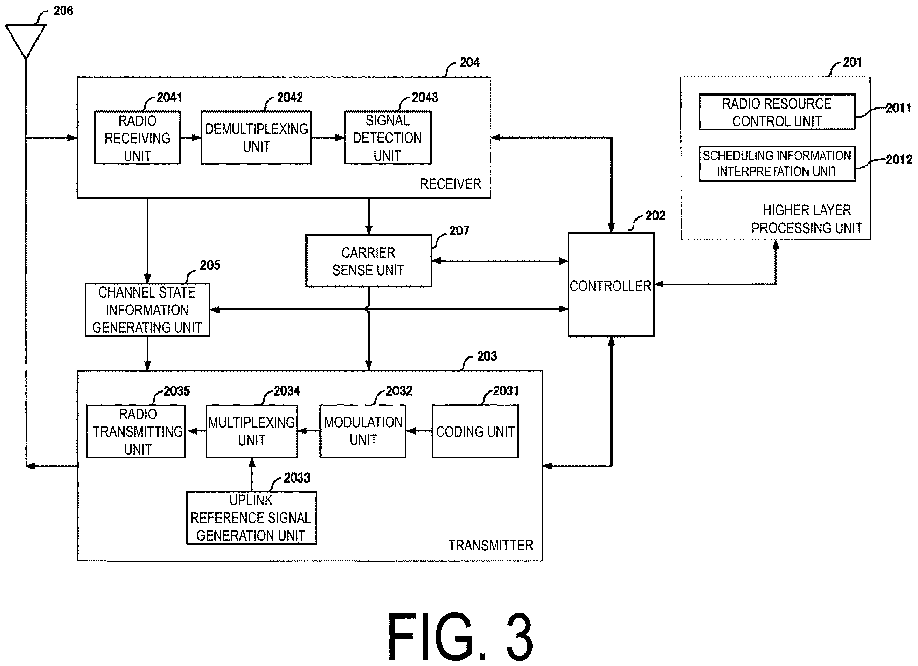

FIG. 3 is a schematic block diagram illustrating a configuration of the terminal apparatus 2 according to the present embodiment. As illustrated in FIG. 3, the terminal apparatus 2A includes a higher layer processing unit (higher layer processing step) 201, a controller (controlling step) 202, a transmitter (transmitting step) 203, a receiver (receiving step) 204, a channel state information generation unit (channel state information generating step) 205, a transmit and/or receive antenna 206, and a carrier sense unit (carrier sense step) 207. The higher layer processing unit 201 includes a radio resource control unit (radio resource controlling step) 2011 and a scheduling information interpretation unit (scheduling information interpreting step) 2012. The transmitter 203 includes a coding unit (coding step) 2031, a modulation unit (modulating step) 2032, an uplink reference signal generation unit (uplink reference signal generating step) 2033, a multiplexing unit (multiplexing step) 2034, and a radio transmitting unit (radio transmitting step) 2035. The receiver 204 includes a radio receiving unit (radio receiving step) 2041, a demultiplexing unit (demultiplexing step) 2042, and a signal detection unit (signal detecting step) 2043.

The higher layer processing unit 201 outputs, to the transmitter 203, the uplink data (the transport block) generated by a user operation or the like. The higher layer processing unit 201 performs processing of the Medium Access Control (MAC) layer, the Packet Data Convergence Protocol (PDCP) layer, the Radio Link Control (RLC) layer, and the Radio Resource Control (RRC) layer.

The higher layer processing unit 201 outputs, to the transmitter 203, information for indicating a terminal apparatus function supported by the terminal apparatus 2A.

The radio resource control unit 2011 manages various configuration information of the terminal apparatuses 2A. The radio resource control unit 2011 generates information to be mapped to each uplink channel, and outputs the generated information to the transmitter 203.

The radio resource control unit 2011 acquires configuration information of CSI feedback transmitted from the base station apparatus, and outputs the acquired information to the controller 202.

The radio resource control unit 2011 acquires information for a carrier sense in the unlicensed band transmitted from the base station apparatus, and outputs the acquired information to the controller 202.

The scheduling information interpretation unit 2012 interprets the downlink control information received through the receiver 204, and determines scheduling information. The scheduling information interpretation unit 2012 generates control information in order to control the receiver 204 and the transmitter 203 in accordance with the scheduling information, and outputs the generated information to the controller 202.

Based on the information input from the higher layer processing unit 201, the controller 202 generates a control signal for controlling the receiver 204, the channel state information generation unit 205, and the transmitter 203. The controller 202 outputs the generated control signal to the receiver 204, the channel state information generation unit 205, and the transmitter 203 to control the receiver 204 and the transmitter 203.

The controller 202 controls the transmitter 203 to transmit CSI generated by the channel state information generation unit 205 to the base station apparatus.

In a case that the controller 202 needs to transmit after a carrier sense, the controller 202 controls the carrier sense unit 207. The controller 202 calculates an energy detection threshold from the transmit power, bandwidth, and the like, and outputs the calculated results to the carrier sense unit 207.

In accordance with the control signal input from the controller 202, the receiver 204 demultiplexes, demodulates, and decodes a received signal received from the base station apparatus 1A through the transmit and/or receive antenna 206, and outputs the resulting information to the higher layer processing unit 201.

The radio receiving unit 2041 converts, by down-converting, a downlink signal received through the transmit and/or receive antenna 206 into a baseband signal, removes unnecessary frequency components, controls the amplification level in such a manner as to preferably maintain a signal level, performs orthogonal demodulation based on an in-phase component and an orthogonal component of the received signal, and converts the resulting orthogonally-demodulated analog signal into a digital signal.

The radio receiving unit 2041 removes a portion corresponding to CP from the digital signal resulting from the conversion, performs fast Fourier transform of the signal from which the CP has been removed, and extracts a signal in the frequency domain.

The demultiplexing unit 2042 demultiplexes the extracted signal into PHICH, PDCCH, EPDCCH, PDSCH, and the downlink reference signal. The demultiplexing unit 2042 performs channel compensation for PHICH, PDCCH, and EPDCCH based on a channel estimation value of a desired signal obtained from channel measurement, detects downlink control information, and outputs the detected downlink control information to the controller 202. The controller 202 outputs PDSCH and the channel estimation value of the desired signal to the signal detection unit 2043.

The signal detection unit 2043, by using PDSCH and the channel estimation value, detects a signal, and outputs the detected signal to the higher layer processing unit 201.

The transmitter 203 generates an uplink reference signal in accordance with the control signal input from the controller 202, codes and modulates the uplink data (the transport block) input from the higher layer processing unit 201, multiplexes PUCCH, PUSCH, and the generated uplink reference signal, and transmits a signal resulting from the multiplexing to the base station apparatus 1A through the transmit and/or receive antenna 206.

The coding unit 2031 codes the uplink control information or uplink data input from the higher layer processing unit 201 in compliance with a coding scheme such as convolutional coding, block coding, turbo coding, LDPC coding, Polar coding, and the like.

The modulation unit 2032 modulates the coded bits input from the coding unit 2031, in compliance with a modulation scheme, such as BPSK, QPSK, 16QAM, or 64QAM, that is notified by using the downlink control information, or in compliance with a modulation scheme predetermined for each channel.

The uplink reference signal generation unit 2033 generates a sequence that is determined according to a predetermined rule (formula), based on a physical cell identity (PCI, also referred to as a Cell ID or the like) for identifying the base station apparatus 1A, a bandwidth in which the uplink reference signal is mapped, a cyclic shift notified by using the uplink grant, a parameter value for generation of a DMRS sequence, and the like.

The multiplexing unit 2034 multiplexes PUCCH and PUSCH signals and the generated uplink reference signal for each transmit antenna port. To be more specific, the multiplexing unit 2034 maps the PUCCH and PUSCH signals and the generated uplink reference signal to resource elements for each transmit antenna port.

The radio transmitting unit 2035 performs Inverse Fast Fourier Transform (IFFT) on a signal resulting from the multiplexing, performs the modulation of OFDM scheme, generates an OFDMA symbol, adds CP to the generated OFDMA symbol, generates a baseband digital signal, converts the baseband digital signal into an analog signal, removes unnecessary frequency components, up-converts a result of the removal into a signal of a carrier frequency, performs power amplification, and outputs a final result to the transmit and/or receive antenna 206 for transmission.

The carrier sense unit 207 performs a carrier sense by using an energy detection threshold or the like, and acquires a channel occupancy time (or channel transmission allowing time).

Note that the terminal apparatus 2 can perform modulation according to not only the OFDMA scheme but also the SC-FDMA scheme.

In a case that ultra large capacity communication is required, such as ultra high definition video transmission, ultra wideband transmission utilizing high frequency bands is desired. Transmission in high frequency bands requires compensation for path loss and beamforming is important. In an environment in which multiple terminal apparatuses exist in a limited area, an Ultra-dense network in which base station apparatuses are deployed at high density is effective in a case ultra high capacity communication is required for each terminal apparatus. However, in a case that base station apparatuses are deployed at high density, the Signal to noise power ratio (SNR) is greatly improved, although strong interference due to beamforming may arrive. Accordingly, interference control (avoidance, suppression) in consideration of beamforming is required to achieve ultra large capacity communication for every terminal apparatus in the limited area.

For example, it is effective to coordinate (cooperate) to perform interference control between base station apparatuses. This allows a centralized control station that can control multiple base station apparatuses to control interference by appropriately controlling radio resources (time, frequency, or spatial layer) or beam directions of each base station apparatus. However, as the number of base station apparatuses managed by the centralized control station increases, such as an ultra high density network, there is a problem that the complexity of interference control is greatly increased. Therefore, an interference controllable technique is desired in the absence of a centralized control station or in a case that a centralized control station is present but does not perform complex operations.

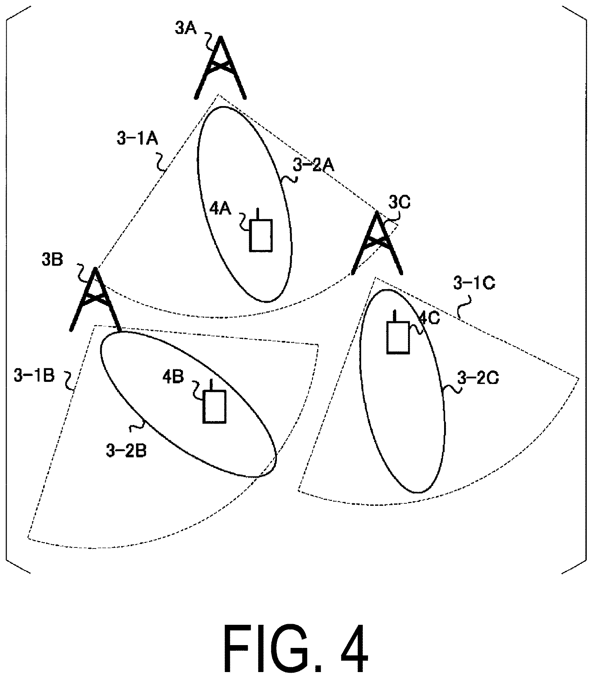

In the present embodiment, an example will be described in which each base station apparatus performs autonomous and dispersive interference control. FIG. 4 is a diagram illustrating an example of a communication system according to the present embodiment. The communication system illustrated in FIG. 4 includes base station apparatuses 3A, 3B, and 3C, and terminal apparatuses 4A, 4B, and 4C. 3-1A, 3-1B, and 3-1C respectively illustrate ranges of carrier sense observed by the base station apparatuses 3A, 3B, and 3C. 3-2A, 3-2B, and 3-2C each are drawing of beamforming with which the base station apparatuses 3A, 3B, and 3C respectively transmit to the terminal apparatuses 4A, 4B, and 4C. Each base station apparatus observes an interference signal (radio resource usage condition) from neighboring base station apparatuses/terminal apparatuses/communication apparatuses, and transmits signals to a range or a direction where interference received from the surroundings or interference imparted to the surroundings is weak. Each base station apparatus performs Listen Before Talk (LBT) to evaluate whether or not other communication apparatuses are communicating (whether in idle or busy) by a carrier (channel) sense prior to transmission. Note that in the present embodiment, interference due to beamforming is a problem, and thus a carrier sense is performed in consideration of beamforming. In a case that the carrier sense is successful with a signal observed (received) at a certain beam width, a transmission period can be acquired as long as it is within the range of the beam width. Note that the beam width is the width of the main beam (main lobe), and is, for example, an angular width (half width) in which the gain decreases from the maximum value of the beam gain (antenna gain) by 3 dB. Note that the beam width includes the direction of the main beam. Beamforming with a certain beam width may also be defined (prescribed). For example, the difference (ratio) between the maximum beam gain of the side lobe outside the beam width or the maximum beam gain within the beam width and the maximum beam gain outside the beam width satisfies a criteria. Further, the difference (ratio) between the beam gain of the side lobe (or back lobe) in an angular direction away by more than or equal to a prescribed angle from the angle decreased by 3 dB from the maximum gain of the beam gain to the direction opposite the direction of the maximum beam gain, and the beam gain within the beam width satisfies a criteria. Accordingly, each base station apparatus can perform beamforming with reduced interference with each other. Note that the base station apparatuses/terminal apparatuses according to the present embodiment can communicate in a licensed band or an unlicensed band. Note that a beam width that is successful in a carrier sense is also referred to as an acquisition beam width. Note that the acquisition beam width includes the direction of the main beam with the beam width successful in the carrier sense. It is desirable that the receive beam and the transmit beam have reciprocity (correspondence) . Accordingly, the carrier sense in consideration of beamforming may be performed in a case that the receive beam and the transmit beam have reciprocity (correspondence) .

The base station apparatus may transmit a data signal or the like with a narrower beam width, provided within the acquisition beam width. In other words, the base station apparatus cannot transmit beamforming with the main beam towards outside the acquisition beam width. Preferable beam directions may be searched by beam sweeping. As a result, it is possible to improve a desired signal power while reducing interference, and thus throughput can be improved. Note that in general, beamforming may result in side lobes outside of the acquisition beam width. Accordingly, beamforming observed within the acquisition beam width may be defined (prescribed). The definition (prescription) is, for example, that the difference (ratio) between the maximum beam gain of the side lobe outside the acquisition beam width or the maximum beam gain within the acquisition beam width and the maximum beam gain outside the acquisition beam width satisfies a criteria.

In a case of communicating in an unlicensed band and that the channel is determined to be idle and the carrier sense is successful, the base station apparatus/terminal apparatus can occupy the channel for a certain period of time. The maximum value of the time period that can occupy the channel (channel occupancy period) is referred to as a Maximum Channel Occupancy Time (MCOT). The MCOT varies depending on the priority of the data. The priority of the data may be expressed by a priority class (channel access priority class). The priority class is indicated by 1, 2, 3, or 4 in order of higher priority. The maximum value of a random period required for LBT may also vary depending on the priority class. Note that the random period is a product of a random positive integer that is less than or equal to a contention window and a slot period (for example, 9 microseconds). The random positive integer equal to or less than a content window size (CWS) is also referred to as a counter in a carrier sense (LBT). The CWS may vary depending on the priority class, the transmission error rate, and the like. In a case that the observed (detected) power is less than an energy detection threshold for at least a prescribed period of time (for example, 4 microseconds) in the slot period, the slot period is considered to be idle. Otherwise, the slot period is considered to be busy. Then, the carrier sense is considered to be successful in a case that it is idle in only a counter number of slots. Note that the slot period may vary depending on the frequency band (frequency bandwidth, carrier frequency), and the slot period can be shortened in high frequency bands. The period of time for determining idle/busy in slot units may vary depending on the frequency band (frequency bandwidth, carrier frequency). That is, in a case that determining idle, the period in which the observed (detected) power is less than the energy detection threshold can be more shortened in the high frequency bands.

Note that, in a licensed band, the slot period may be expressed in terms of a time unit ts or the number of OFDM symbols based on the sampling period. In a case that the subcarrier spacing is represented as SCS and the FFT size is represented as NFFT, ts is ts = (1/(SCS ^{∗} NFFT)). For example, the slot period is expressed as one OFDM symbol or 256 ts. Note that, in a case of being expressed as the number of OFDM symbols, the symbols may be expressed in fractions, such as, for example, 0.25 OFDM symbols or 0.5 OFDM symbols. Note that because the OFDM symbol length and ts are based on the subcarrier spacing, the subcarrier spacing for representing the slot period may be determined. Since the slot period may vary depending on the frequency band (frequency bandwidth, carrier frequency), the subcarrier spacing for representing the slot period may vary for each frequency band. As the slot period gets shorter for higher frequency bands, the subcarrier spacing for representing the slot period becomes wider in the higher frequency bands.

In a case of communicating in the licensed band, the similar operation to the unlicensed band is possible, but the channel need not necessarily be occupied after LBT. In the licensed band, it may be accepted that a certain number of communication apparatuses communicate simultaneously in order to maintain flexibility. Therefore, in the licensed band, a period of time (channel transmission allowing period) in which the right to transmit in the channel is given by LBT can be obtained. The maximum value of the channel transmission allowing period is also referred to as Maximum allowing transmission time (MATT). Note that the channel occupancy period and the channel transmission allowing period are collectively referred to as the transmission period.

The base station apparatus can use an energy detection threshold in order to determine whether or not other communication apparatuses are communicating during the carrier sense. The base station apparatus can configure the energy detection threshold to be less than or equal to the maximum energy detection threshold. Beamforming can obtain a beam gain, so in a case that beamforming is assumed, the beam gain to the energy detection threshold can be taken into account. For example, an offset value X dB due to beamforming can be the difference between the gain of the main beam and the gain of the side lobe. At this time, the energy detection threshold increased by X dB is the energy detection threshold that takes the beam gain into account. Increasing the energy detection threshold increases the probability of successful carrier sense, but is less likely to greatly increase interference power since an area that provides interference by the beamforming gets narrower. Note that in a case that beamforming is not assumed or the beam pattern is in all directions, X is 0 dB. Note that the maximum value of the offset value X dB due to beamforming can be configured to a different value depending on the frequency band (frequency bandwidth, carrier frequency) in which the base station apparatus 1A communicates. The offset value X dB due to beamforming may also be calculated based on an Equivalent isotopically radiated power (EIRP) including the transmit power of the base station apparatus 1A. Whether the base station apparatus 1A configures the offset value X dB due to beamforming based on the antenna gain or based on EIRP may be determined by the frequency band (frequency bandwidth, carrier frequency) in which the base station apparatus 1A performs communication.

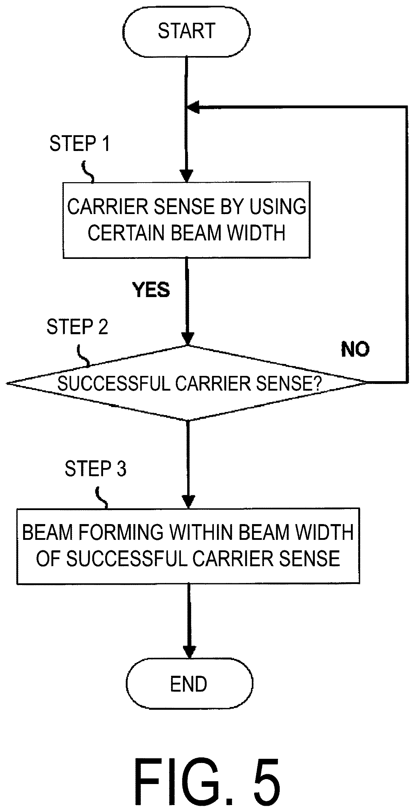

FIG. 5 is a simple flowchart according to the present embodiment. The base station apparatus receives (observes) the surrounding communication conditions with a receive beam having a certain beam width and beam direction, and the carrier sense unit 106 performs a carrier sense by using a received signal (observation signal) (step 1). The carrier sense unit 106 determines whether the carrier sense is successful or not (step 2). In a case that the carrier sense is not successful (in a case of NO in step 2), the process returns to step 1, and the carrier sense unit 106 performs a carrier sense by using another beam width or beam direction. In a case that the carrier sense is successful (in a case of YES in step 2), the transmitter 103 transmits with beamforming within the acquisition beam width.

In a case of transmitting in a narrower beam width within the acquisition beam width, the beam gain will be higher. In this case, in a case that the beam directions are matched, there will be a strong interference. Thus, the maximum value of the beam gain used for transmission between the base station apparatuses is shared (prescribed). This can avoid the occurrence of a significantly strong interference signal. While the maximum value of the beam gain may not be shared (prescribed) between the base station apparatuses, the maximum value of the sum of the beam gain and the transmit power may be shared (prescribed). In a case that the beam gain may be increased, the transmit power is correspondingly lowered, and this makes it possible to avoid occurrence of a significantly strong interference signal by. Note that the sum of the beam gain and the transmit power may be the EIRP described above.

Note that in a case that the acquisition beam width is wide, the probability of acquiring the transmission period is decreased, and in a case that the acquisition beam width is narrow, the transmission period is easily acquired but the probability of the terminal apparatus being within the acquisition beam width will be reduced. To operate efficiently, a beam width preferable for the carrier sense is required. The number or the density of the base station apparatuses can be a factor for the beam width. It is efficient that the beam width is decreased as the number and the density of the base station apparatuses increases, and the beam width is increased as the number and the density of the base station apparatuses decreases. Thus, the centralized control station can transmit the number of base station apparatuses or the density of the base station apparatuses around the base station apparatus. Alternatively, the base station apparatus has a mechanism for sharing the number of base station apparatuses or the density of the base station apparatuses around the base station apparatus. At this time, the base station apparatus can determine a preferable beam width depending on the number of base station apparatuses or the density of the base station apparatuses around the base station apparatus. The maximum beam width that can be obtained may be prescribed depending on the number of neighboring base station apparatuses or the density of the base station apparatuses. The base station apparatus may also be prescribed with the maximum beam width that can be obtained, depending on the period of switching the beam (or the longest time period during which beam switching has to be completed). The base station apparatus may also be prescribed with the maximum beam width that can be obtained, depending on whether or not there is a probability that a signal based on a communication scheme other than the communication scheme configured for the apparatus itself is present in the frequency channel on which the apparatus itself communicates.

While the base station apparatus is capable of transmitting with a preferable beam width within the acquisition beam width, neighbor base station apparatuses do not enhance interference reduction effects without knowledge of the acquisition beam width. Thus, neighbor base station apparatuses need to know the beam width acquired by a certain base station apparatus. The base station apparatus may broadcast, to the surrounding base station apparatuses, control information including some or all of the acquisition beam width, the direction of the gain maximum value of the acquisition beam width, and the channel occupancy period/channel transmission allowing period, by a carrier sense. In this case, the neighbor base station apparatuses can receive the control information and perform a carrier sense in favor of a beam direction with high available possibility, so the efficiency is improved. The base station apparatus may transmit a resource reservation signal in the acquisition beam width other than the beam width to transmit the data signal. The beam direction to transmit the resource reservation signal will not be successful in a carrier sense, and the neighboring base station apparatuses cannot use the direction.

Note that the interference control based on the carrier sense taking into account the beamforming described above has been described with reference to the base station apparatus. However, one aspect of the present invention is not limited thereto, and the present invention can be applied to the terminal apparatus as well.

In a case of performing beamforming to each terminal apparatus within the acquisition beam width, a preferable beam direction can be searched by beam sweeping. For example, a synchronization signal or a CSI-RS is used for the beam sweeping. The synchronization signal is transmitted with a synchronization signal block (SS block) as a unit. The SS block includes a Primary synchronization signal (PSS), a Secondary synchronization signal (SSS), and a PBCH. Up to two SS blocks are included per slot. Multiple SS blocks may be allocated in a timing range (window) of 5 ms, for example. The timing range (window) is also referred to as a synchronization signal occlusion (SS occasion). The timing range (window) is periodically transmitted. The maximum number allocatable within the timing range (window) may vary depending on the subcarrier spacing. The position of the timing range (window) and/or the position of the SS blocks in the timing range (window) is indicated by the DMRS and/or the PBCH. The position of the timing range (window) is indicated by, for example, a radio frame number (System frame number (SFN)) indicating a radio frame number. The period of the timing range (window) is indicated by higher layer signaling from the base station apparatus. The position of the range (window) of 5 ms in the SCell may be indicated by higher layer signaling from the base station apparatus. By performing beamforming to multiple SS blocks allocated within the timing range (window) and transmitted in different beam directions, and by being reported of a SS block to be a preferable received power/reception quality from the terminal apparatus, the base station apparatus can know the beam direction preferable for the terminal apparatus. The terminal apparatus may report the index of the SS block to indicate the SS block to be a preferable received power/reception quality for the base station apparatus, or may transmit a random access preamble with radio resources corresponding to the SS block to be a preferable received power/reception quality.

Note that in the interference control based on the carrier sense described above, the synchronization signal may be transmitted without a carrier sense in the licensed band, but a carrier sense is required in the unlicensed band. In a case that the carrier sense fails, it may fail to transmit the synchronization signal at the desired timing. In this case, the base station apparatus may skip the transmission of the SS block outside of the channel occupancy period.

In a case that only the SS block is transmitted and that the channel occupancy period is less than or equal to a certain criteria (for example, 1 ms), the base station apparatus can transmit the SS block after LBT for a fixed period of time (for example 25 microseconds or 8 microseconds). In a case that the channel occupancy period exceeds the certain criteria (for example, 1 ms), the base station apparatus may transmit the SS block after LBT for a random period of time. Note that the fixed period of time and the criteria of the channel occupancy period described above can be configured to different values depending on the frequency band in which the base station apparatus performs communication. For example, the base station apparatus may configure different fixed period of time and criteria of the channel occupancy period for the frequency band in 5GHz band and the frequency band in 60GHz band. The fixed period of time and the criteria of the channel occupancy period configured for each frequency band is not limited to a specific value, but as the frequency increases, the fixed period of time and the criteria of the channel occupancy period are preferably configured to be shorter. The fixed period of time and the criteria of the channel occupancy period can be configured by the same mathematical formula for each frequency band. For example, in a case that the prescribed frame period is A and the slot period is B, the fixed period can be expressed by a mathematical formula such as A + B and A + 2 ^{∗} B, and the values of A and B can be configured to different values for each frequency band. The base station apparatus 1A can also perform LBT in a time period in which the SS block of the timing range (window) is not being transmitted. The fixed period of time and the criteria of the channel occupancy period may be configured based on the subcarrier spacing of signals transmitted by the base station apparatus 1A.

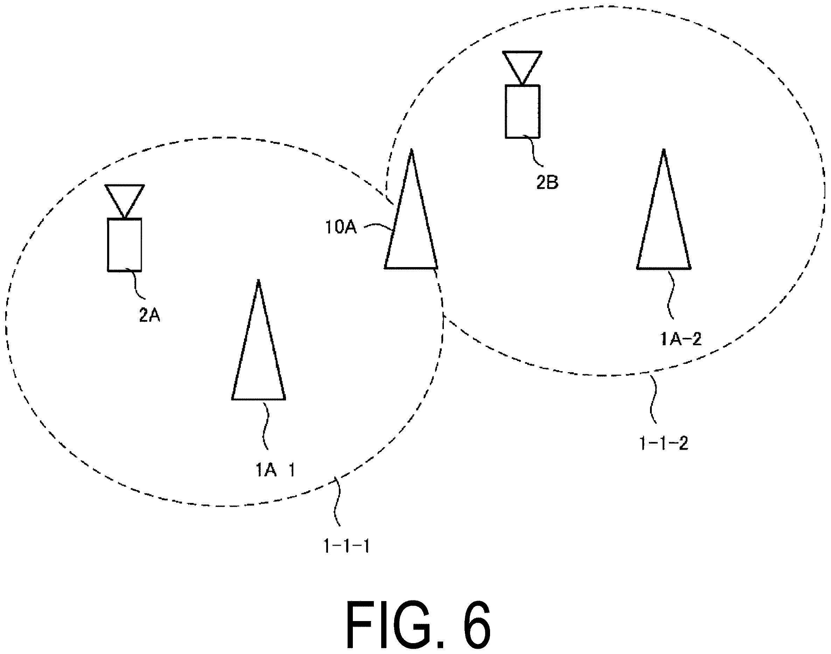

FIG. 6 is a schematic diagram illustrating an example of a communication system according to the present embodiment. As illustrated in FIG. 6, the communication system according to the present embodiment at least includes a base station apparatus 1A-1, a base station apparatus 1A-2, and a base station apparatus 10A. Here, the base station apparatus 1A-1 and the base station apparatus 1a-2 at least include the same functions, and thus the base station apparatus 1A-1 and the base station apparatus 1a-2 may be collectively referred to as the base station apparatus 1A below. The base station apparatus 10A supports a second radio access technology (second RAT) different from a first radio access technology (first RAT) supported by the base station apparatus 1A. Both the first RAT and the second RAT can be configured to an unlicensed band. The first RAT includes LAA for communicating by assisting a cell in a licensed band with CA, DC, or the like. The first RAT includes a communication scheme for configuring at least a portion of radio parameters (frame structure, channel configuration) configured to a licensed band to an unlicensed band. The second RAT includes a wireless LAN, and includes, for example, IEEE802.11ac, IEEE802.11ad standard, and their associated standards (IEEE802.11ax, IEEE802.11ay, and IEEE802.11ba). The base station apparatus 1A and the base station apparatus 10A may perform a carrier sense or LBT or Clear channel assessment (CCA) for determining whether the radio medium is in an idle state or a busy state before performing signal transmission.

As described above, the base station apparatus 1A can perform a carrier sense to reserve a radio medium (prescribed frequency channel) for a prescribed period of time (MCOT). Here, the carrier sense is an operation of ensuring a radio medium for a prescribed period of time, or in other words, is an operation to confirm that a radio signal does not interfere with other apparatuses (for example, the base station apparatus 10A) (or does not affect communication of the base station apparatus 10A) in a case that the base station apparatus 1A transmits the radio signal to the radio medium in the prescribed period of time. Thus, it is preferable for the base station apparatus 1A to perform data communication in a MCOT by using assumed radio parameters in acquisition of the MCOT (for example, subcarrier spacing, transmit powers, antenna patterns, or beam directions). This is because there is a possibility to cause interfere with other apparatuses that have been confirmed not to interfere during a carrier sense implementation in a case that a radio parameter is changed for the data communication in the MCOT. Hereinafter, a carrier sense performed in a case that ensuring the MCOT is also referred to as a first carrier sense.

The base station apparatus 1A according to the present embodiment can implement a beam sweep for scanning a transmit beam used for data communication with the terminal apparatus 2A prior to the data communication with the terminal apparatus 2A.

In the beam sweep operation, the base station apparatus 1A can transmit multiple signals (beam sweep signals, synchronization signal blocks) to the terminal apparatus 2A by using different transmit beams. The terminal apparatus 2A can notify the base station apparatus 1A of control information indicating a received signal transmitted from the base station apparatus 1A and indicating a most desirable quality for the apparatus itself among the signals received. The base station apparatus 1A can acquire the most desirable transmit beam for the terminal apparatus 2A by acquiring the control information notified from the terminal apparatus 2A.

The signal for the beam sweep is not limited to any signal. The base station apparatus 1A according to the present embodiment can transmit a synchronization signal (synchronization signal block) as a beam sweep signal. Here, the synchronization signal is a signal including at least one of a PSS, a SSS, or a broadcast channel. The base station apparatus according to the present embodiment can transmit the synchronization signal multiple times within a prescribed period of time (Window). The base station apparatus according to the present embodiment can periodically configure the prescribed period of time with a prescribed cycle. However, depending on the result of the carrier sense, the base station apparatus may change the length of the prescribed period of time, the start time, or the prescribed cycle. The base station apparatus can notify the terminal apparatus that the length and the start time of the prescribed period may vary depending on the result of the carrier sense. Note that the base station apparatus 1A according to the present embodiment may transmit a CSI-RS as a beam sweep signal.

Here, the base station apparatus 1A can transmit the beam sweep signal within a period of MCOT. However, transmitting multiple beam sweep signals with different transmit beams in the MCOT by the base station apparatus 1A means transmitting the beam sweep signals with radio parameters different from the radio parameter assumed in a case that the base station apparatus 1A has performed the carrier sense to acquire the MCOT. This means that the beam sweep signals which the base station apparatus 1A transmits in the MCOT may interfere with other apparatuses.

The base station apparatus 1A according to the present embodiment can perform a carrier sense by assuming multiple parameters that may be used in a MCOT in performing a carrier sense. For example, the base station apparatus 1A may perform a carrier sense with all four beam patterns for obtaining a MCOT in a case that four beam patterns may be used in the MCOT. Specifically, in a case the base station apparatus 1A performs a carrier sense for a prescribed period of time (for example 13 us or 8 us), a carrier sense is performed while switching between four beam patterns and the average received power is less than a prescribed threshold (a carrier sense level, an energy detection level, a minimum reception sensitivity), and thus a MCOT can be acquired. By controlling in such a way, the base station apparatus 1A can minimize interference imparted to other apparatuses even in a case that the four beam patterns are switched in the acquired MCOT.

Note that, according to the above-described example, the radio parameters are beam patterns (beam directions), but the radio parameters assumed by the base station apparatus 1A according to the present embodiment include a subcarrier spacing, a transmit power, a frame length, a symbol length, a slot length, and the like, and the radio parameters assumed by the base station apparatus 1A are not limited to any parameter.

Note that, according to the above-described example, what transmitted by the base station apparatus while changing radio parameters is a synchronization signal block, but the same applies to a case where the base station apparatus changes radio parameters for a data signal (for example, a signal transmitted on a PDSCH).

As described above, since the base station apparatus 1A is configured to perform a carrier sense by assuming multiple radio parameters, the base station apparatus 1A according to the present embodiment can configure the period of the carrier sense performed in a case of acquiring a MCOT while assuming to configure multiple radio parameters to be longer than the period of the carrier sense performed in a case of acquiring a MCOT while not assuming to configure multiple radio parameters. For example, the base station apparatus 1A can configure the CW value (or the maximum value of the CW candidate values) for use in the carrier sense performed for acquiring a MCOT to be large. For example, the base station apparatus 1A can configure the prescribed period of time (Defer period, for example) for performing a carrier sense performed for acquiring a MCOT to be large. By the base station apparatus 1A taking the carrier sense period longer, it is possible to recognize that there is a low probability of presence of an apparatus performing communication by using the radio medium in the vicinity of the base station apparatus 1A, and thus, the probability of interfering with other apparatuses can be reduced even in a case that the base station apparatus 1A configures different radio parameters in the MCOT.

In a case of acquiring a MCOT while assuming to configure multiple radio parameters, the base station apparatus 1A according to the present embodiment can configure the length of the MCOT acquired by the carrier sense to be shorter than the MCOT in a case of not assuming to configure the multiple radio parameters. For example, in a case that the base station apparatus 1A is able to reserve the MCOT up to 10 ms in a case of not assuming to configure multiple radio parameters by the carrier sense, the base station apparatus 1A may acquire the MCOT up to 1 ms in a case of assuming to configure the multiple radio parameters.

In a case that the base station apparatus 1A according to the present embodiment acquires the MCOT while assuming that multiple radio parameters are configured, a carrier sense can be performed again to reserve the radio medium and then to transmit the signal in a case that the radio parameters are changed in the MCOT. Here, the carrier sense performed by the base station apparatus lAin the MCOT is an operation performed to confirm that signals transmitted by changing the radio parameters in the MCOT do not interfere with other apparatuses, rather than the carrier sense for ensuring the MCOT. Therefore, in a case that the base station apparatus 1A performs the carrier sense, it is not necessary to perform a random back-off operation (an operation related to CW) performed to prevent collisions between transmission signals, and the carrier sense may be only performed for a prescribed period of time. Hereinafter, the carrier sense performed in order to confirm that the signals transmitted by changing the radio parameters does not interfere with other apparatuses in the MCOT is also referred to as a second carrier sense.

In a case that the radio medium is determined to be in a busy state as a result of performing the second carrier sense by changing the radio parameters in the MCOT, it is not possible to transmit a radio signal by using the radio parameters, but a radio signal can be transmitted in a case that the radio parameters are changed again to perform a carrier sense and the radio medium are determined to be in an idle state in the MCOT. For this reason, it is preferable that the time (cycle) at which the base station apparatus 1A starts the carrier sense performed in the MCOT is configured in advance. For example, the base station apparatus 1A may configure the time at which the carrier sense performed in the MCOT is started to be the boundary of the slot start (subframe boundary, symbol boundary). The base station apparatus can notify the terminal apparatus that the radio parameters may be changed in the MCOT. Note that even in a case that the communication apparatus determines that the radio medium is in a busy state as a result of performing the second carrier sense by changing the radio parameters in the MCOT, in a case that a signal is to be transmitted by using the radio parameters assumed in the first carrier sense performed for MCOT acquisition, the signal can be transmitted even in a case that the second carrier sense determines that the radio medium is in a busy state.

The base station apparatus 1A can assume that a carrier sense is performed in the MCOT in a case of transmitting by changing the radio parameters, and can make the density of the beam sweep signals (the number of beam sweep signals included in a prescribed time (or frequency band)) to be equal to or less than the number configured in the licensed band. For example, in a case that the base station apparatus 1A performs communication by using a prescribed subcarrier spacing, it is assumed that the terminal apparatus 2A is configured in advance to transmit the beam sweep signals a prescribed number of times. In a case that the base station apparatus 1A configures the number of beam sweep signals transmitted in a prescribed period of time (Window) to be X, the base station apparatus 1A can configure the number of beam sweep signals to a number smaller than X in the unlicensed band. The base station apparatus 1A can notify in advance the terminal apparatus 2A of positions where the beam sweep signals are not transmitted in the unlicensed band. In the unlicensed band, the terminal apparatus 2A may be configured to be in a receiving operating state for the beam sweep signals in a period (or frequency) during which the base station apparatus 1A may transmit the beam sweep signals.

Note that, in a case that the subcarrier spacing configured by the base station apparatus for the signal transmitted in the licensed band and the subcarrier spacing configured by the base station apparatus for the signal transmitted in the unlicensed band by the base station apparatus are different from each other, it is conceivable that the densities of beam sweep signals are different in the first place. Although the above-described method assumes a case that the same subcarrier spacing is configured for the licensed band and the unlicensed band, even in a case that difference subcarrier spacings are configured for the licensed band and the unlicensed band, in a case that the subcarrier spacing of the unlicensed band is configured to the licensed band, it is included in the contents of the present embodiment in a case that the density of the beam sweep signals configured to the licensed band is greater than or equal to the density of the beam sweep signals actually configured to the unlicensed band.

Note that the subcarrier spacing configured in the licensed band and the subcarrier spacing configured to the unlicensed band may be different from each other, but depending on the subcarrier spacing configured in the licensed band, the subcarrier spacing configured to the unlicensed band may be limited. For example, in a case that the communication apparatus configures 30 kHz of subcarrier spacing for the licensed band, subcarrier spacing equal to or greater than 30 kHz can be configured for the unlicensed band.

Note that, in a case that it is guaranteed that no other communication system is present on the radio medium where the base station apparatus 1A performs a carrier sense (for example, in a case that it is guaranteed that no other communication system is present by regulation), the parameters of the first carrier sense related to MCOT acquisition may be the same for a case of assuming the use of multiple radio parameters in the MCOT and a case of not assuming the use of multiple radio parameters in the MCOT. The parameters of the carrier sense include a value of CW (or the maximum value of CW candidate values), or an energy detection threshold, or a Defer period. Even in a case that the radio parameters are changed in the MCOT, the second carrier sense need not be performed again as long as it is guaranteed that no other communication system is present on the radio medium.

Radio parameters that are configured for synchronization signal blocks transmitted in the MCOT may be changed between a case that other communication systems are not present and a case that other communication systems are present, in the radio medium in which the base station apparatus 1A performs a carrier sense. For example, the base station apparatus may configure a subcarrier spacing at or over a prescribed interval for the synchronization signal blocks in a case that other communication systems are present in the radio medium. In a case that no other communication system is present, the base station apparatus may configure the subcarrier spacing to be configured for the synchronization signal blocks to be any interval.

In a case that other communication systems may be present in the radio medium in which the base station apparatus 1A performs a carrier sense, the base station apparatus 1A can configure the subcarrier spacing to be configured for the beam sweep signals at a prescribed interval. Specifically, in a case that a MCOT is reserved and communication is performed on a prescribed frequency channel (for example, a frequency channel in 60 GHz band), the base station apparatus 1A can configure the subcarrier spacing with a prescribed subcarrier spacing (for example, 240 kHz) or more to communicate. By controlling in such a way, the base station apparatus 1A can change the transmit beam to reduce the time period for transmitting the signal, and thus the probability of interfering with an apparatus of the other communication systems can be reduced.

Note that, for signals having a short transmit time (MCOT), such as a signal for beam sweep, multiple radio parameters may be used in the MCOT in a case that the base station apparatus 1A may perform a carrier sense in antenna patterns (beam patterns) in the entire direction (the omnidirection). However, since the surrounding communication apparatuses also perform beamforming, it is desirable to perform a carrier sense with a threshold for a certain period of time. For example, a value of CW (or the maximum value of candidate values of CW) is a larger value than a case that a single radio parameter is assumed in the MCOT. For example, a fixed length of carrier sense time is a larger value than a case that a single radio parameter is assumed in the MCOT. For example, an energy detection threshold in the carrier sense is a smaller value than a case that a single radio parameter is assumed in the MCOT.

The communication apparatuses (the base station apparatus and the terminal apparatus) according to the present embodiment can perform a beam recovery procedure in which the transmitter modifies the beam used for transmitting the signal, in a case that the communication quality in communication with the opposing communication apparatus is significantly reduced. In the beam recovery procedure, the communication apparatus can transmit a signal for beam sweep again (for example, a synchronization signal, a CSI-RS) or can trigger a retransmission of the synchronization signal to the opposing communication apparatus. The beam recovery procedure may be initiated in response to a trigger by the communication apparatus to transmit the signal. In a case that the communication apparatus according to the present embodiment performs the beam recovery procedure in the radio medium reserved for a prescribed period of time by the apparatus itself, the communication apparatus can release (purge, terminate) the reserved radio medium and then enter the beam recovery procedure.

The base station apparatus may determine whether or not to perform the above-described operation, based on the frequency band of the radio medium reserved by the carrier sense. For example, in a case that the frequency band of the radio medium is 6GHz or greater, the base station apparatus changes operation between a case that multiple radio parameters are configured in the MCOT and a case that multiple radio parameters are not configured, On the other hand, in a case that the frequency band of the radio medium is less than or equal to 6GHz, the same operation can be performed for the that multiple radio parameters are configured in the MCOT and for the case that multiple radio parameters are not configured.

According to the method described above, the base station apparatus 1A according to the present embodiment can efficiently leverage the frequency band reserved by the carrier sense (LBT) while reducing the probability of interfering with other apparatuses that share the radio medium. Note that the method described in the above-described embodiment can also be applied to the terminal apparatus.

### Second Embodiment

In a case that multiple beam sweep signals are transmitted in the MCOT, the base station apparatus 1A according to the present embodiment can configure and transmit each beam sweep signal at different frequency positions. In other words, the base station apparatus 1A according to the present embodiment can transmit the beam sweep signals by using frequency hopping.

The frequency hopping pattern by which the base station apparatus 1A configures the beam sweep signals may be configured by the base station apparatus 1A, but it is preferable to notify the terminal apparatus 2A of the frequency hopping pattern in advance. The frequency hopping pattern may be notified in a higher layer, such as an RRC signal.

The base station apparatus 1A can classify the beam sweep signals into two attributes. The base station apparatus 1A can configure a predetermined frequency hopping pattern for the beam sweep signals configured to the first attribute, and the base station apparatus 1A can determine and configure a frequency hopping pattern for the beam sweep signal configured to the second attribute. In other words, the beam sweep signals configured to the first attribute are common between the base station apparatuses 1A, while the beam sweep signals configured to the second attribute are allowed to be different between the base station apparatuses 1A. Note that the frequency hopping pattern configured to the first attribute in advance may also be configured from multiple patterns, but it is preferable that the multiple frequency hopping patterns be notified in advance to the terminal apparatus 2A or be configured in advance by specifications or the like. The terminal apparatus 2A is capable of demodulating at least the beam sweep signals configured to the first attribute by performing a reception operation by assuming at least the frequency hopping pattern configured in advance.

The base station apparatus 1A can transmit the synchronization signal blocks as signals of comb-shaped spectrum (or OFDM signals on which subcarriers (RBs) are aligned at a constant period), and a prescribed hopping pattern can be applied for the frequency at which the allocation of the signals of the comb-shaped spectrum starts. Note that the communication apparatus can configure a common hopping pattern and a unique hopping pattern for the prescribed hopping pattern.

### Common to All Embodiments

Note that the frequency band used by the communication apparatus (the base station apparatus and the terminal apparatus) according to the present embodiment is not limited to the licensed band and unlicensed band described heretofore. Frequency bands intended by the present embodiments include a frequency band called a white band (white space) which is actually not used for the purpose of preventing radio interference between frequencies or the like although the allowance of the use is given from a country or a region to specific services (for example a frequency band that is allocated for television broadcasting but is not used in some regions), or a shared frequency band (license shared band) that has been exclusively assigned to particular operators, but are expected to be shared by multiple operators in the future. In other words, it means that the apparatus according to the present embodiment can consider the white band and the license shared band as an unlicensed band to perform communication.

A program running on an apparatus according to an aspect of the present invention may serve as a program that controls a Central Processing Unit (CPU) and the like to cause a computer to function in such a manner as to realize the functions of the embodiment according to the aspect of the present invention. Programs or the information handled by the programs are temporarily stored in a volatile memory such as a Random Access Memory (RAM), a non-volatile memory such as a flash memory, a Hard Disk Drive (HDD), or any other storage device system.

Note that a program for realizing the functions of the embodiment according to an aspect of the present invention may be recorded in a computer-readable recording medium. This configuration may be realized by causing a computer system to read the program recorded on the recording medium for execution. It is assumed that the "computer system" refers to a computer system built into the apparatuses, and the computer system includes an operating system and hardware components such as a peripheral device. Furthermore, the "computer-readable recording medium" may be any of a semiconductor recording medium, an optical recording medium, a magnetic recording medium, a medium dynamically retaining the program for a short time, or any other computer readable recording medium.

Furthermore, each functional block or various characteristics of the apparatuses used in the above-described embodiment may be implemented or performed on an electric circuit, for example, an integrated circuit or multiple integrated circuits. An electric circuit designed to perform the functions described in the present specification may include a general-purpose processor, a Digital Signal Processor (DSP), an Application Specific Integrated Circuit (ASIC), a Field Programmable Gate Array (FPGA), or other programmable logic devices, discrete gates or transistor logic, discrete hardware components, or a combination thereof. The general-purpose processor may be a microprocessor or may be a processor of known type, a controller, a micro-controller, or a state machine instead. The above-mentioned electric circuit may include a digital circuit, or may include an analog circuit. Furthermore, in a case that with advances in semiconductor technology, a circuit integration technology appears that replaces the present integrated circuits, it is also possible to use a new integrated circuit based on the technology according to one or more aspects of the present invention.

Note that the present invention of the present patent application is not limited to the above-described embodiments. According to the embodiment, apparatuses have been described as an example, but the present invention of the present application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses.

The embodiments of the present invention have been described in detail above referring to the drawings, but the specific configuration is not limited to the embodiments and includes, for example, an amendment to a design that falls within the scope that does not depart from the gist of the present invention. Furthermore, various modifications are possible within the scope of one aspect of the present invention defined by claims, and embodiments that are made by suitably combining technical means disclosed according to the different embodiments are also included in the technical scope of the present invention. Furthermore, a configuration in which constituent elements, described in the respective embodiments and having mutually the same effects, are substituted for one another is also included in the technical scope of the present invention.

### Industrial Applicability

An aspect of the present invention can be preferably used in a base station apparatus and a communication method. An aspect of the present invention can be utilized, for example, in a communication system, communication equipment (for example, a cellular phone apparatus, a base station apparatus, a wireless LAN apparatus, or a sensor device), an integrated circuit (for example, a communication chip), or a program.

### Reference Signs List

1A, 3A, 3B, 3C Base station apparatus
2A, 4A, 4B, 4C Terminal apparatus
101 Higher layer processing unit
102 Controller
103 Transmitter
104 Receiver
105 Transmit and/or receive antenna
106 Carrier sense unit
1011 Radio resource control unit
1012 Scheduling unit
1031 Coding unit
1032 Modulation unit
1033 Downlink reference signal generation unit
1034 Multiplexing unit
1035 Radio transmitting unit
1041 Radio receiving unit
1042 Demultiplexing unit
1043 Demodulation unit
1044 Decoding unit
201 Higher layer processing unit
202 Controller
203 Transmitter
204 Receiver
205 Channel state information generation unit
206 Transmit and/or receive antenna
207 Carrier sense unit
2011 Radio resource control unit
2012 Scheduling information interpretation unit
2031 Coding unit
2032 Modulation unit
2033 Uplink reference signal generation unit
2034 Multiplexing unit
2035 Radio transmitting unit
2041 Radio receiving unit
2042 Demultiplexing unit
2043 Signal detection unit

## Claims

1. A communication apparatus for performing a first carrier sense, the communication apparatus comprising:
a carrier sense unit configured to perform the first carrier sense and reserve a radio medium only during a prescribed period of time; and
a transmitter configured to transmit a signal with radio parameters including at least a beam direction in the prescribed period of time, wherein
in a case that the transmitter transmits the signal with a plurality of the radio parameters in the prescribed period of time, the carrier sense unit performs the first carrier sense, based on the plurality of the radio parameters.

2. The communication apparatus according to claim 1, wherein
in a case that the transmitter transmits the signal with the plurality of the radio parameters in the prescribed period of time, the carrier sense unit performs a second carrier sense immediately before the signal is transmitted with each of the plurality of the radio parameters.

3. The communication apparatus according to claim 1, wherein
the transmitter transmits a synchronization signal or a data signal, and
in a case that the transmitter transmits only the synchronization signal, the carrier sense unit performs the first carrier sense, based on one of the plurality of the radio parameters.

4. The communication apparatus according to claim 1, wherein
the carrier sense unit performs the first carrier sense, based on each of the plurality of the radio parameters, and determines that the radio medium is allowed to be reserved in a case that an average value of received power acquired by the first carrier sense is less than a prescribed threshold.

5. The communication apparatus according to claim 1, wherein
a parameter that the carrier sense unit configures in a case of performing the first carrier sense is different between a case that the transmitter transmits the signal with the plurality of the radio parameters in the prescribed period of time and a case that the transmitter transmits the signal with one of the plurality of the radio parameters in the prescribed period of time.

6. The communication apparatus according to claim 3, wherein
the transmitter configures and transmits a plurality of the synchronization signals at different frequency positions, based on a prescribed frequency hopping pattern within the prescribed period of time.

7. The communication apparatus according to claim 5, wherein
the transmitter configures a plurality of the frequency hopping patterns; and
the plurality of the frequency hopping patterns are frequency hopping patterns common to the communication apparatus and other base station apparatuses or frequency hopping patterns specific to the communication apparatus itself.

8. The communication apparatus according to any one of claims 1 to 7, wherein
the first carrier sense is an operation to be performed by the carrier sense unit to reserve the radio medium only during the prescribed period of time.

9. The communication apparatus according to claim 2, wherein
the second carrier sense is an operation to be performed by the carrier sense unit to confirm that interference to the radio medium does not occur in the prescribed period of time reserved by the first carrier sense.

10. A communication method for a communication apparatus for performing a carrier sense, the communication method comprising the steps of:
performing the carrier sense and reserving a radio medium only during a prescribed period of time;
transmitting a signal with radio parameters including at least a beam direction in the prescribed period of time; and
in a case that the signal is transmitted with a plurality of the radio parameters in the prescribed period of time, performing the carrier sense, based on the plurality of the radio parameters.
